# FASCICULE DE BREVET EUROPEEN

(11) **EP 0 374 047 B1**
(45) Date de publication et mention de la délivrance du brevet: **12.05.1993**
(21) Numéro de dépôt: 89403467.7
(22) Date de dépôt: 13.12.1989
(51) Int. Cl.: B01L 1/02

(54) **Dispositifs d'évacuation et d'introduction rapide pour isolateur étanche**
Vorrichtungen zur schnellen Aus- und Einführung von Gegenständen für einen nach aussen dicht abgeschlossenen Raum
Rapid object introduction and removal devices for a sealed insulator

(30) Priorité: 15.12.1988 FR 8816566
(43) Date de publication de la demande: 20.06.1990
(73) Titulaire: ISO CONCEPT, F-92100 Boulogne (FR)
(72) Inventeur: Saint Martin, Bernard, F-92120 Montrouge (FR)
(74) Mandataire: Mongrédien, André

(56) Documents cités:
- EP-A- 0 195 703
- FR-A- 2 140 277
- FR-A- 2 354 133
- FR-A- 2 608 460

## Description

L'invention concerne un dispositif permettant d'évacuer rapidement des objets de nature et de forme quelconques d'un isolateur étanche en surpression, et un dispositif permettant d'introduire des objets rapidement dans un isolateur en dépression.

L'invention s'applique plus précisément aux isolateurs étanches contenant de l'air ou un gaz se trouvant à une pression plus élevée que la pression régnant à l'extérieur de l'isolateur. Cette situation correspond à toutes les utilisations dans lesquelles il est nécessaire d'éviter que l'atmosphère extérieure ne pénètre à l'intérieur de l'isolateur. En particulier, elle concerne donc les isolateurs étanches utilisés notamment pour les applications médicales, électroniques, pharmaceutiques et biomédicales.

L'une des difficultés essentielles ressenties par les concepteurs et par les utilisateurs de tels isolateurs en surpression concerne les possibilités d'extraire différents objets sans que l'atmosphère régnant à l'intérieur de l'isolateur soit modifiée. Le terme "objets" doit être pris ici dans son sens le plus large, c'est-à-dire indépendamment de la nature de ces objets, de leur consistance et de leur forme.

L'invention s'applique également aux isolateurs étanches fonctionnant en dépression, qui contiennent un milieu hostile, dangereux ou contaminant. Dans ce cas, une difficulté concerne l'introduction d'objets quelconques dans l'isolateur sans risque pour le personnel situé à l'extérieur.

Une solution habituellement apportée à ce problème consiste à équiper les isolateurs en surpression d'un ou plusieurs sas de transfert débouchant à l'extérieur et équipés de moyens permettant leur stérilisation.

Il est également connu d'avoir recours à des conteneurs de transfert étanches, qui peuvent être mis en communication avec l'isolateur par l'intermédiaire de systèmes de doubles portes préservant le confinement de ce dernier.

Si ces solutions existantes sont parfaitement satisfaisantes du point de vue de la préservation du confinement de l'isolateur, elles impliquent des procédures de mise en oeuvre relativement longues qui s'avèrent parfois particulièrement pénalisantes pour les utilisateurs.

Une autre solution connue, utilisée notamment en médecine, consiste à rompre l'étanchéité de l'isolateur en créant dans la paroi de celui-ci une ou plusieurs ouvertures débouchant directement à l'extérieur. Pour empêcher la pénétration de l'air extérieur dans l'isolateur, chaque ouverture est alors équipée d'un dispositif dit "à flux laminaire" créant, en travers de l'ouverture, un balayage d'air ayant pour fonction de créer un rideau d'air à ce niveau. Dans la pratique, cette solution s'avère cependant peu efficace et une partie de l'air extérieur traverse pratiquement toujours le rideau d'air pour pénétrer dans l'isolateur.

L'invention a précisément pour objet un dispositif original permettant, par des manutentions particulièrement simples et rapides, d'évacuer des objets d'un isolateur étanche en surpression sans que l'air extérieur ne pénètre dans ce dernier.

Selon l'invention, ce résultat est obtenu au moyen d'un dispositif d'évacuation rapide d'objets pour un isolateur étanche dans lequel règne une pression supérieure à la pression extérieure, cet isolateur étant équipé d'un circuit de ventilation comportant une canalisation d'admission et une canalisation d'échappement équipées de moyens de filtration, ce dispositif étant caractérisé par le fait qu'il comprend un tube d'évacuation dont une extrémité débouche dans l'isolateur et dont l'extrémité opposée est obturée de façon étanche par une porte, la canalisation d'échappement débouchant dans le tube d'évacuation, à proximité de la porte.

Dans ce dispositif, étant donné que la canalisation d'échappement crée une aspiration dans le tube d'évacuation, à proximité de la porte obturant ce dernier, le tube d'évacuation est balayé sur toute sa longueur par un flux d'air ou de gaz dirigé vers l'extérieur de l'isolateur. Lorsque des objets doivent être évacués de ce dernier, ils sont d'abord placés dans le tube d'évacuation, puis la porte obturant ce dernier est ouverte. La circulation de l'air ou du gaz se poursuit alors dans le même sens et à un débit plus élevé car il y a moins d'opposition, l'air n'ayant plus à franchir la barrière que représente le filtre placé dans la canalisation d'échappement. De plus, même si une faible quantité de l'air extérieur pénètrait dans l'extrémité du tube d'évacuation, cet air serait repris en totalité par le courant d'air ou de gaz aspiré par la canalisation d'échappement. Lorsque tous les objets ont été évacués et que la porte est refermée, l'atmosphère contenue dans l'isolateur n'est donc pas modifiée.

Dans un mode de réalisation préféré de l'invention, la canalisation d'échappement est raccordée approximativement à angle droit sur le tube d'évacuation et ce dernier à la forme d'un cylindre.

De préférence, pour faciliter l'évacuation des objets, le tube d'évacuation est orienté approximativement verticalement et raccordé sur le fond de l'isolateur.

Parallèlement, l'invention a aussi pour objet un dispositif permettant d'introduire des objets dans un isolateur étanche en dépression.

Selon l'invention, il est proposé à cet effet un dispositif d'introduction rapide d'objets pour un isolateur étanche dans lequel règne une pression inférieure à la pression extérieure, cet isolateur étant équipé d'un circuit de ventilation comportant une canalisation d'admission et une canalisation d'échappement équipées de moyens de filtration, ce dispositif étant caractérisé par le fait qu'il comprend un tube d'introduction, dont une extrémité débouche dans l'isolateur et dont l'extrémité opposée est obturée de façon étanche par une porte, la canalisation d'admission débouchant dans le tube d'introduction, à proximité de la porte.

Un mode de réalisation préféré de l'invention va à présent être décrit, à titre d'exemple non limitatif, en se référant aux dessins annexés, dans lesquels :
- la figure 1 est une vue de côté d'un isolateur étanche équipé d'un dispositif d'évacuation rapide d'objets conforme à l'invention ; et
- la figure 2 est une vue en coupe et à plus grande échelle de ce dispositif.

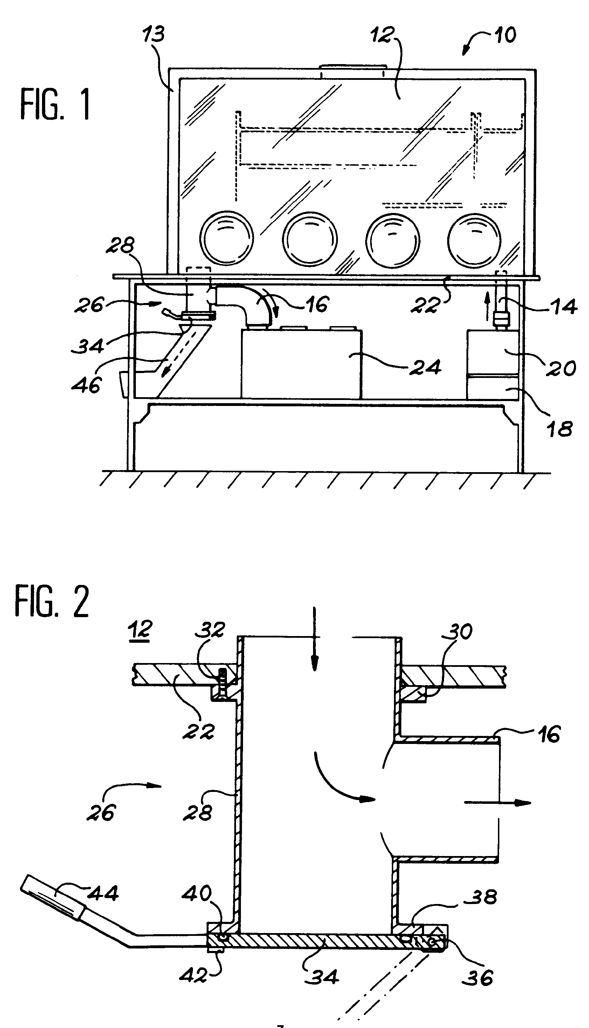

Sur la figure 1, la référence 10 désigne de façon générale un isolateur étanche délimitant un volume clos 12 dans lequel la pression est maintenue en permanence à une valeur supérieure à la pression atmosphérique régnant à l'extérieur de l'isolateur.

Le volume 12 délimité par la paroi étanche 13 de l'isolateur est rempli d'air stérile qui est renouvelé en permanence par un circuit de ventilation ouvert comportant une canalisation d'admission d'air 14 et une canalisation d'échappement d'air 16. La canalisation d'admission d'air 14 est équipée de moyens de ventilation 18 tels qu'une pompe ou un ventilateur prélevant l'air à l'extérieur de l'isolateur pour le refouler dans le volume 12 au travers d'un filtre 20. Dans l'exemple de réalisation représenté, cette canalisation 14 débouche dans le fond 22 de l'isolateur.

La canalisation d'échappement d'air 16, qui est également raccordée sur le fond 22 de l'isolateur, rejette l'air contenu dans le volume 12 dans l'atmosphère extérieure au travers d'un filtre 24.

Conformément à l'invention et comme l'illustre plus en détail la figure 2, l'isolateur 10 est équipé d'un dispositif d'évacuation rapide d'objets désigné de façon générale par la référence 26. Ce dispositif 26 se compose principalement d'un tube d'évacuation 28, de forme cylindrique et dont l'axe est orienté approximativement verticalement. L'extrémité supérieure du tube d'évacuation 28 est raccordée sur le fond 22 de l'isolateur, par exemple au moyen d'une bride 30 soudée sur le tube 28 et fixée sur le fond 22, par exemple au moyen de vis 32. Un joint d'étanchéité (non représenté) assure l'étanchéité de cette fixation. Le tube d'évacuation 28 débouche ainsi par son extrémité supérieure directement à l'intérieur du volume 12 délimité par l'isolateur.

A son extrémité inférieure, le tube d'évacuation 28 est obturé de façon étanche par une porte 34. Dans l'exemple de réalisation représenté schématiquement sur les figures, la porte 34 est articulée par un axe 36 sur une bride 38 soudée à l'extrémité inférieure du tube 28. Un joint d'étanchéité annulaire 40, logé dans une gorge formée dans la porte 34, assure l'étanchéité en venant en contact avec la bride 38 lorsque la porte est fermée.

Le maintien en position fermée de la porte 34 est assuré par tout moyen approprié tel qu'un verrou 42. L'ouverture et la fermeture de la porte 34 sont assurées par exemple au moyen d'une poignée de manoeuvre 44 solidaire de la porte 34.

Conformément à une caractéristique essentielle de l'invention, la canalisation d'échappement d'air 16 débouche dans le tube d'évacuation 28, à proximité de la porte 34. Dans l'exemple de réalisation représenté, la canalisation d'échappement d'air 16 est raccordée approximativement à angle droit sur le tube 28.

Dans des conditions normales d'utilisation de l'isolateur 10, la porte 34 est maintenue fermée. Le confinement du volume 12 délimité par la paroi de l'isolateur est donc préservé. Dans ces conditions, le circuit de ventilation fonctionne en permanence. Par conséquent, l'air contenu dans le tube d'évacuation 28 est balayé en permanence par un flux d'air descendant dans ce tube et poussé vers la canalisation d'échappement d'air 16, compte tenu de la surpression existant dans le volume 12 par rapport à l'atmosphère extérieure.

Lorsque différents objets doivent être évacués du volume 12, ces objets sont placés à l'intérieur du tube d'évacuation 28, dans lequel ils sont empilés sur la porte 34. Cette dernière est ensuite ouverte par déverrouillage du verrou 42, de telle sorte que les objets descendent par gravité dans une goulotte 46 qui est de préférence prévue en dessous de la porte 34, comme l'illustre schématiquement la figure 1. Il est à noter que la commande de l'ouverture de la porte peut se faire par tout moyen approprié, aussi bien de l'extérieur que de l'intérieur de l'isolateur.

Lorsque la porte 34 est ouverte, le courant d'air circulant vers le bas à l'intérieur du tube d'évacuation 28 est accéléré sous l'effet de la différence de pression régnant entre le volume 12 et l'extérieur. Seule une quantité très faible de l'air se trouvant à l'extérieur remonte donc à l'intérieur du tube d'évacuation 28. De plus, cette faible quantité d'air se trouve automatiquement prise par le courant d'air aspiré par la canalisation d'échappement d'air 16. Par conséquent, lorsque la porte 34 est refermée, aucune proportion mesurable de l'air extérieur n'a pénétré dans le volume 12.

Dans le mode de réalisation représenté, les avantages du dispositif d'évacuation rapide selon l'invention sont accrus par la disposition du tube d'évacuation 28 sous le fond 22 de l'isolateur, qui permet une évacuation très rapide des objets. En variante, le dispositif d'évacuation rapide selon l'invention pourrait cependant être implanté sur d'autres parois de l'isolateur, sans sortir du cadre de l'invention.

Dans la pratique, le diamètre du tube d'évacuation 28 est choisi en fonction de la dimension des objets qui doivent être évacués de l'isolateur. La longueur du tube est ensuite déterminée en fonction du débit d'air que l'on désire obtenir à l'intérieur de ce tube. A titre d'exemple, une vitesse d'air permanente minimum d'environ 2 m/s peut ainsi être obtenue dans le tube d'évacuation 28, ce qui garantit la préservation de l'atmosphère contenue dans le volume 12. Le raccordement de la canalisation d'échappement d'air 16 est réalisé quant à lui aussi près que possible de l'extrémité du tube d'évacuation 28 portant la porte 34.

Bien entendu, l'invention n'est pas limitée au mode de réalisation qui vient d'être décrit à titre d'exemple, mais en couvre toutes les variantes. Ainsi, si le tube d'évacuation 28 est de préférence cylindrique, il peut dans des cas particuliers avoir une section non circulaire, par exemple carrée ou rectangulaire. La porte 34 peut également être réalisée de façon différente, par exemple sous la forme d'une trappe coulissante ou pivotante autour d'un axe parallèle à l'axe du tube d'évacuation.

Par ailleurs, au lieu d'être un circuit ouvert comme cela a été décrit, le circuit de ventilation de l'isolateur peut être un circuit fermé. Dans ce cas, le volume 12 délimité par les parois de l'isolateur peut contenir un gaz autre que de l'air. Il est alors nécessaire de prévoir un système de compensation dont le débit compensera la déperdition de gaz due à l'ouverture de la trappe.

Enfin, si le dispositif selon l'invention est particulièrement adapté à l'évacuation d'objets hors d'un isolateur en surpression, il peut aussi être utilisé pour introduire des objets dans un isolateur en dépression. Dans ce cas, l'implantation du tube d'évacuation est totalement identique à celle qui vient d'être décrite en référence aux figures 1 et 2, mais le sens de circulation de l'air dans le circuit de ventilation est inversé. Cela signifie que la canalisation 16 devient la canalisation d'admission d'air ou de gaz et la canalisation 14 la canalisation d'échappement. Les moyens de ventilation 18 sont alors placés dans la canalisation 16, alors que chacune des canalisations 14 et 16 reste équipée d'un filtre 20,24. Bien entendu, le tube d'évacuation 28 devient alors un tube d'introduction.

## Revendications

1. Dispositif d'évacuation rapide d'objets provenant d'un isolateur étanche (10) dans lequel règne une pression supérieure à la pression extérieure, cet isolateur étant équipé d'un circuit de ventilation comportant une canalisation d'admission (14) et une canalisation d'échappement (16) équipées de moyens de filtration (20,24), ce dispositif étant caractérisé par le fait qu'il comprend un tube d'évacuation (28), dont une extrémité débouche dans l'isolateur (10) et dont l'extrémité opposée est obturée de façon étanche par une porte (34), la canalisation d'échappement (16) débouchant dans le tube d'évacuation, à proximité de la porte.

2. Dispositif selon la revendication 1, caractérisé par le fait que la canalisation d'échappement (16) est raccordée approximativement à angle droit sur le tube d'évacuation (28).

3. Dispositif selon l'une quelconque des revendications 1 et 2, caractérisé par le fait que le tube d'évacuation (28) a la forme d'un cylindre.

4. Dispositif selon l'une quelconque des revendications précédentes, caractérisé par le fait que, l'isolateur (10) comportant un fond horizontal (22), le tube d'évacuation (28) est orienté approximativement verticalement et raccordé sur ce fond.

5. Dispositif selon la revendication 4, caractérisé par le fait qu'une goulotte (46) est placée en dessous de la porte (34).

6. Dispositif d'introduction rapide d'objets dans un isolateur étanche (10) dans lequel règne une pression inférieure à la pression extérieure, cet isolateur étant équipé d'un circuit de ventilation comportant une canalisation d'admission (16) et une canalisation d'échappement (14) équipées de moyens de filtration (24, 20), ce dispositif étant caractérisé par le fait qu'il comprend un tube d'introduction (28), dont une extrémité débouche dans l'isolateur (10) et dont l'extrémité opposée est obturée de façon étanche par une porte (34), la canalisation d'admission (16) débouchant dans le tube d'introduction, à proximité de la porte.

7. Dispositif selon la revendication 6, caractérisé par le fait que la canalisation d'admission (16) est raccordée approximativement à angle droit sur le tube d'introduction (28).

8. Dispositif selon l'une quelconque des revendications 6 et 7, caractérisé par le fait que le tube d'introduction (28) a la forme d'un cylindre.

9. Dispositif selon l'une quelconque des revendications 6 à 8, caractérisé par le fait que, l'isolateur (10) comportant un fond horizontal (22), le tube d'introduction (28) est orienté approximativement verticalement et raccordé sur ce fond.

10. Dispositif selon la revendication 9, caractérisé par le fait qu'une goulotte (46) est placée en dessous de la porte (34).

## Patentansprüche

1. Schnellentleerungsvorrichtung für Gegenstände, die aus einem dichten Isolator (10) kommen, in dem ein Druck herrscht, der höher ist als der Außendruck, wobei dieser Isolator mit einem Ventilationskreislauf ausgerüstet ist, der eine Zuführungsleitung (14) und einer Abführungsleitung (16) umfaßt, die mit Filtermitteln (20, 24) ausgerüstet sind, wobei diese Vorrichtung dadurch **gekennzeichnet** ist,
daß sie ein Abführungsrohr (28) enthält, dessen eines Ende in den Isolator (10) mündet und dessen entgegengesetztes Ende auf dichte Weise verschlossen ist durch eine Tür (34), wobei die Abführungsleitung (16) in der Nähe der Tür in das Abführungsrohrs mündet.

2. Vorrichtung nach Anspruch 1, dadurch gekennzeichnet, daß die Abführungsleitung (16) ungefähr rechtwinklig an dem Abführungsrohr (28) angeschlossen ist.

3. Vorrichtung nach einem der Ansprüche 1 und 2, dadurch gekennzeichnet, daß das Abführungsrohr (28) die Form eines Zylinders hat.

4. Vorrichtung nach einem der vorhergehenden Ansprüche, dadurch gekennzeichnet, daß der Isolator (10) einen horizontalen Boden (22) aufweist, wobei das Abführungsrohr (28) ungefähr vertikal ausgerichtet und an diesen Boden angeschlossen ist.

5. Vorrichtung nach Anspruch 4, dadurch gekennzeichnet, daß ein Ablauf (46) unter der Tür (34) angeordnet ist.

6. Schnelleinführungssvorrichtung für Gegenstände in einen dichten Isolator (10), in dem ein Druck herrscht, der niedriger ist als der Außendruck, wobei dieser Isolator mit einem Ventilationskreislauf ausgerüstet ist, der eine Zuführungsleitung (16) und einer Abführungsleitung (14) umfaßt, die mit Filtermitteln (24, 20) ausgerüstet sind, wobei diese Vorrichtung dadurch gekennzeichnet ist, daß sie ein Zuführungsrohr (28) enthält, dessen eines Ende in den Isolator (10) mündet und dessen entgegengesetztes Ende auf dichte Weise verschlossen ist durch eine Tür (34), wobei die Zuführungsleitung (16) nahe bei der Tür in das Zuführungsrohr mündet.

7. Vorrichtung nach Anspruch 6, dadurch gekennzeichnet, daß die Zuführungsleitung (16) ungefähr rechtwinklig an das Zuführungsrohr (28) angeschlossen ist.

8. Vorrichtung nach einem der Ansprüche 6 und 7, dadurch gekennzeichnet, daß das Zuführungsrohr die Form eines Zylinders aufweist.

9. Vorrichtung nach einem der Ansprüche 6 bis 8, dadurch gekennzeichnet, daß sie einen ebenen Boden (22) enthält und das Zuführungsrohr (28) ungefähr vertikal ausgerichtet und an diesen Boden angeschlossen ist.

10. Vorrichtung nach Anspruch 9, dadurch gekennzeichnet, daß ein Ablauf (46) unter der Tür (34) angebracht ist.

## Claims

1. Device for the rapid discharge of objects from a tight insulator (10) in which there is a pressure above the external pressure, said insulator being equipped with a ventilation circuit having an intake pipe (14) and an exhaust pipe (16) equipped with filtering means (20, 24) said device being characterized in that it comprises a discharge tube (28), whereof one end issues into the insulator (10) and whereof the opposite end is tightly sealed by a door (34), the exhaust pipe (16) issuing into the discharge tube in the vicinity of the door.

2. Device according to claim 1, characterized in that the exhaust pipe (16) is connected approximately at right angles to the discharge tube (28).

3. Device according to either of the claims 1 and 2, characterized in that the discharge tube (28) is shaped like a cylinder.

4. Device according to any one of the preceding claims, characterized in that the insulator (10) has a horizontal bottom (22), the discharge tube (28) being oriented approximately vertically and connected to said bottom.

5. Device according to claim 4, characterized in that a chute (46) is placed beneath the door (34),.

6. Device for the fast introduction of objects into a tight insulator (10) in which there is a pressure below the external pressure, said insulator being equipped with a ventilation circuit having an intake pipe (16) and an exhaust pipe (14) equipped with filtering means (24, 20), said device being characterized in that it comprises an introduction tube (28), whereof one end issues into the insulator (10) and whereof the opposite end is tightly sealed by a door (34), the intake pipe (16) issuing into the introduction tube in the vicinity of the door.

7. Device according to claim 6, characterized in that the intake pipe (16) is connected approximately at right angles to the introduction tube (28).

8. Device according to either of the claims 6 and 7, characterized in that the introduction tube (28) is shaped like a cylinder.

9. Device according to any one of the claims 6 to 8, characterized in that the insulator (10) has a horizontal bottom (22), the introduction tube (28) being oriented approximately vertically and connected to said bottom.

10. Device according to claim 9, characterized in that a chute (46) is placed beneath the door (34).
